# EUROPEAN PATENT APPLICATION

(11) **EP 2 528 392 A1**
(43) Date of publication of application: **28.11.2012**
(21) Application number: 11734680.9
(22) Date of filing: 19.01.2011
(51) Int. Cl.: H04W 48/16, H04W 16/32, H04W 72/04

(54) **MOBILE COMMUNICATION SYSTEM, NETWORK APPARATUS AND MOBILE COMMUNICATION METHOD**

(30) Priority: 19.01.2010 JP 2010009533
(71) Applicant: NTT DoCoMo, Inc., Tokyo 100-6150 (JP)
(72) Inventor: HOSONO, Hiroyuki, Tokyo 100-6150 (JP); TSUNEDA, Takayuki, Tokyo 100-6150 (JP); MASUDA, Masafumi, Tokyo 100-6150 (JP); TERAYAMA, Takeshi, Tokyo 100-6150 (JP)
(74) Representative: HOFFMANN EITLE
(86) International application number: PCT/JP2011/050873
(87) International publication number: WO 2011/090074

(57) **Abstract**

A network apparatus 20 includes a specific cell information management unit 22 configured to manage information on a specific cell for each of the plurality of public cells, the specific cell having a service area overlapping with the service area of the public cell and using the same frequency as the public cell, a communication unit 21 configured to receive a communication request signal from a mobile communication terminal visiting any of the plurality of public cells, and a selection unit 24 configured to select a communication frequency to be used by the mobile communication terminal among the communication frequencies of the plurality of public cells based on the information managed by the specific cell information management unit in response to the communication request signal from the mobile communication terminal.

## Description

### TECHNICAL FIELD

The present invention relates to a mobile communication system having multiple public cells whose communication frequencies are different from one another and at least one specific cell, and a network apparatus and a mobile communication method which are used in the mobile communication system.

### BACKGROUND ART

There has been known a specific cell referred to as a CSG (Closed Subscriber Group) cell, a home cell, a femtocell, or the like (e.g., Non-Patent Document 1). Note that an access type is settable in the specific cell. The access type is "Closed," "Hybrid," or "Open".

The "Closed" specific cell is configured to permit only a specific user (UE; User Equipment) to receive provision of services. The "Hybrid" specific cell is configured to permit a specific user to perform communications with a higher quality than other users (non-specific users). The "Open" specific cell is configured to permit all the users to receive provision of services, as is the case with a general public cell.

Here, a method shown below has been proposed as a method of selecting a communication cell with which a mobile communication terminal is to perform communications among multiple public cells. Note that communication frequencies of the respective public cells are different from one another.

In a first method, a mobile communication terminal measures a reception quality of a downlink signal from each public cell and the mobile communication terminal reports the measured reception quality to a network side. The network side selects a public cell with a good reception quality as a communication cell among the multiple public cells based on the reception qualities reported from the mobile communication terminal (e.g., Patent Document 1).

In a second method, a network side selects a public cell whose congestion is small as the communication cell among multiple public cells based on the congestion of each public cell (e.g. , Patent Document 2). Note that in the second method, a mobile communication terminal does not need to report the reception qualities to the network side.

### PRIOR ART DOCUMENT

### NON-PATENT DOCUMENT

Non-Patent Document 1: 3GPP TS22.220

### PATENT DOCUMENT

Patent Document 1: Japanese Patent Application Publication No. 2004-235710
Patent Document 2: Japanese Patent Application Publication No. Hei 8-331637

### SUMMARY OF THE INVENTION

In the first method, the reception qualities have to be reported from the mobile communication terminal to the network side before the network side selects a communication cell. Accordingly, such a long time is required until a communication cell is selected that a control delay occurs.

On the other hand, in the second approach, there may be a case where a proper communication cell cannot be selected by the following reasons. Specifically, in a state where public cells and a specific cell coexist, a downlink signal from the specific cell interferes with a downlink signal from the public cell. Accordingly, even when a communication cell is selected based on the congestion of the specific cell, there is a possibility of selecting as a communication cell a specific cell whose reception quality of a downlink signal is poor due to the interference of the downlink signal from the specific cell.

For this reason, the present invention has been made with a view to solving the above-described problem. Accordingly, an objective of the present invention is to provide a mobile communication system, a network apparatus, and a mobile communication method, which are capable of properly selecting a public cell as a communication cell among multiple public cells even in a state where the multiple public cells and a specific cell coexist.

A mobile communication system according to the first feature has a plurality of public cells whose communication frequencies are different from one another and at least one specific cell. The mobile communication system includes: a specific cell information management unit configured to manage information on a specific cell for each of the plurality of public cells, the specific cell having a service area overlapping with the service area of the public cell and using the same frequency same as the public cell; a reception unit configured to receive a communication request signal from a mobile communication terminal visiting any of the plurality of public cells; and a selection unit configured to select a communication frequency to be used by the mobile communication terminal among the communication frequencies of the plurality of public cells based on the information managed by the specific cell information management unit in response to the communication request signal from the mobile communication terminal.

In the first feature, the specific cell information management unit may manage the number of specific cells for each of the plurality of public cells, the specific cells each having a service area overlapping with the service area of the public cell and using the same frequency as the public cell.

In the first feature, the specific cell information management unit may manage the area of a service cell of a specific cell for each of the plurality of public cells, the specific cell having a service area overlapping with the service area of the public cell and using the same frequency as the public cell.

In the first feature, the mobile communication system may further includes a calculation unit configured to calculate the area of a service area of a specific cell based on transmission power and an antenna beam width of the specific cell.

In the first feature, the selection unit selects a communication frequency to be used by the mobile communication terminal among the communication frequencies of the plurality of public cells based on congestions of the plurality of public cells in addition to the information managed by the specific cell information management unit.

A network apparatus according to the second feature is configured to manage a plurality of public cells whose communication frequencies are different from one another and at least one specific cell. The network apparatus includes a specific cell information management unit configured to manage information on a specific cell for each of the plurality of public cells, the specific cell having a service area overlapping with the service area of the public cell and using the same frequency as the public cell; a reception unit configured to receive a communication request signal from a mobile communication terminal visiting any of the plurality of public cells; and a selection unit configured to select a communication frequency to be used by the mobile communication terminal among the communication frequencies of the plurality of public cells based on the information managed by the specific cell information management unit in response to the communication request signal from the mobile communication terminal.

A mobile communication method according to the third feature is applied to a mobile communication system having a plurality of public cells whose communication frequencies are different from one another and at least one specific cell. The mobile communication method includes: step A of managing information on a specific cell for each of the plurality of public cells, the specific cell having a service area overlapping with the service area of the public cell and using the same frequency as the public cell; step B of receiving a communication request signal from a mobile communication terminal visiting any of the plurality of public cells; and step C of selecting a communication frequency to be used by the mobile communication terminal among the communication frequencies of the plurality of public cells based on the information managed at step A in response to the communication request signal from the mobile communication terminal.

### BRIEF DESCRIPTION OF DRAWINGS

[Fig. 1] Fig. 1 is a drawing showing a mobile communication system 100 according to a first embodiment.
[Fig. 2] Fig. 2 is a drawing showing an example of a cell configuration according to the first embodiment.
[Fig. 3] Fig. 3 is a drawing showing a network apparatus 20 according to the first embodiment.
[Fig. 4] Fig. 4 is a flowchart showing an operation of the mobile communication system 100 according to the first embodiment.
[Fig. 5] Fig. 5 is a drawing showing a method of acquiring specific cell information according to Modification 1.
[Fig. 6] Fig. 6 is a drawing showing a method of acquiring specific cell information according to Modification 1.
[Fig. 7] Fig. 7 is a drawing showing a method of acquiring specific cell information according to Modification 1.
[Fig. 8] Fig. 8 is a drawing showing a method of acquiring specific cell information according to Modification 1.
[Fig. 9] Fig. 9 is a drawing showing a network apparatus 20 according to Modification 2.
[Fig. 10] Fig. 10 is a drawing showing a mobile communication system 100 according to Modification 3.

### MODE FOR CARRYING OUT THE INVENTION

A mobile communication system according to an embodiment of the present invention is described below by referring to the drawings. In the following description of the drawings, same or similar reference numerals are given to denote same or similar portions.

Note that the drawings are merely schematically shown and proportions of sizes and the like are different from actual ones. Thus, specific sizes and the like should be judged by referring to the description below. In addition, there are of course included portions where relationships or percentages of sizes of the drawings are different with respect to one another.

### [Summary of Embodiments]

A mobile communication system according to an embodiment has multiple public cells whose communication frequencies are different from one another and at least one specific cell. The mobile communication system includes a specific cell information management unit configured to manage information on a specific cell for each of the public cells, the specific cell having a service area overlapping with a service are of the public cell and using the frequency same as the public cell, a reception unit configured to receive a communication request signal from a mobile communication terminal visiting any of the public cells, and a selection unit configured to select a communication frequency to be used by the mobile communication terminal among the communication frequencies of the public cells based on the information managed by the specific cell information management unit in response to the communication request signal from the mobile communication terminal.

According to the embodiment, the selection unit selects a communication frequency to be used by the mobile communication terminal among the communication frequencies of the multiple public cells based on the information managed by the specific cell information management unit, i.e., information on each specific cell having a service area overlapping with the service area of the public cell and using the same frequency as the public cell.

According, the communication frequency (the public cell) to be used by the mobile communication terminal can be selected in consideration of interference from the specific cell.

Also, a reception quality does not need to be reported from the mobile communication terminal to the network side before the network side selects the communication cell. Thus, a control delay can be reduced.

Note that specific cells in embodiments are preferably cells installed in small and large scales. It is preferable that the specific cells be cells including an HNB (Home Node B), a HeNB (Home Evolved Node B), a femto BTS, and the like.

### [First Embodiment]

### (Configuration of Mobile Communication System)

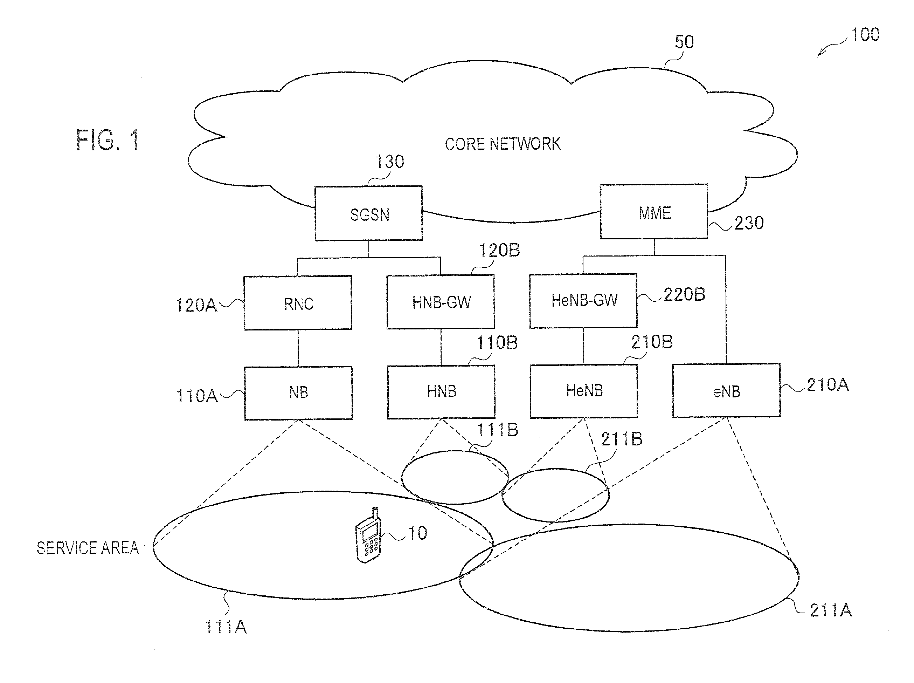

The configuration of a mobile communication system according to a first embodiment is described below by referring to the drawings. Fig. 1 is a drawing showing a mobile communication system 100 according to the first embodiment.

As shown in Fig. 1, the mobile communication system 100 includes a mobile terminal device 10 (hereinafter, UE 10) and a core network 50. In addition, the mobile communication system 100 includes a first communication system and a second communication system.

For example, the first communication system 100 is a communication system supporting UMTS (Universal Mobile Telecommunication System). The first communication system has a base station 110A (hereinafter, NB 110A), a home base station 110B (hereinafter, HNB 110B), a RNC 120A, a home base station gateway 120B (hereinafter, HNB-GW 120B), and an SGSN 130.

Note that a radio access network (UTRAN; Universal Terrestrial Radio Access Network) supporting the first communication system includes the NB 110A, HNB 110B, RNC 120A, and HNB-GW 120B.

For example, the second communication system is a communication system supporting LTE (Long Term Evolution). The second communication system has, for example, a base station 210A (hereinafter, eNB 210A), a home base station 210B (hereinafter, HeNB 210B), a home base station gateway 220B (hereinafter, HeNB-GW 220B), and an MME 230.

Note that a radio access network (E-UTRAN; Evolved Universal Terrestrial Radio Access Network) supporting the second communication system includes the eNB 210A, HeNB 210B, and HeNB-GW 220B.

The UE 10 is a device (User Equipment) configured to communicate with the first communication system or the second communication system. For example, the UE 10 has a function to perform radio communications with the NB 110A and the HNB 110B. Or, the UE 10 has a function to perform radio communications with the eNB 210A and the HeNB 210B.

The NB 110A is a device (NodeB) having a public cell 111A and configured to perform radio communications with the UE 10 present in the public cell 111A.

The HNB 110B is a device (Home NodeB) having a specific cell 111B and configured to perform radio communications with the UE 10 present in the specific cell 111B.

The RNC 120A is a device (Radio Network Controller) connected with the NB 110A and configured to establish a radio connection (RRC Connection) with the UE 10 present in the public cell 111A.

The HNB-GW 120B is a device (Home NodeB Gateway) connected with the HNB 110B and configured to establish a radio connection (RRC Connection) with the UE 10 present in the specific cell 111B.

The SGSN 130 is a device (Serving GPRS Support Node) conf igured to exchange packets in a packet exchange domain. The SGSN 130 is provided in the core network 50. Although omitted in Fig. 1, a device (MSC; Mobile Switching Center) to perform line switching in a line switching domain may be provided in the core network 50.

The eNB 210A is a device (evolved NodeB) having a public cell 211A and configured to perform radio communications with the UE 10 present in the public cell 211A.

The HeNB 210B is a device (Home evolved NodeB) having a specific cell 211B and configured to perform radio communications with the UE 10 present in the specific cell 211B.

The HeNB-GW 220B is a device (Home evolved NodeB Gateway) connected with the HeNB 210B and configured to manage the HeNB 210B.

The MME 230 is a device (Mobility Management Entity) connected with the eNB 210A and configured to manage mobility of the UE 10 establishing the radio connection with the HeNB 210B. Also, the MME 230 is a device connected with the HeNB 210B via the HeNB-GW 220B and configured to manage the mobility of the UE 10 establishing the radio connection with the HeNB 210B.

Note that the public cell and the specific cell should be understood as functions to perform radio communications with the UE 10. However, the public cell and the specific cell are also used as terms to express service areas of cells. Also, a cell such as the public cell or the specific cell is identified by a frequency, diffusion code, or time slot, which is used in a cell.

The specific cell is sometimes referred to as a femtocell, a CSG (Closed Subscriber Group), or a home cell. Also, the specific cell is configured to be settable with an access type for defining UEs 10 allowed to access the specific cell. The access type is "Closed," "Hybrid," or "Open".

The "Closed" specific cell is configured to permit only a specific user (UE; User Equipment) managed by the specific cell to receive provision of services.

The "Hybrid" specific cell is configured to permit a specific user managed by the specific cell to perform communications with a high quality and is configured to permit a non-specific user not managed by the specific cell to perform communications with a best effort quality.

The "Open" specific cell is configured to permit all the UEs 10 to receive provision of services, as is the case with the public cell. Here, in the "Open" cell, UEs 10 can perform communications with equal quality without being distinguished as to whether the UEs 10 are managed by the specific cell.

Note that the access type may be an "ACCESS CLASS BARRED" to prohibit an access of the UE 10 by each access class, or a "CELL BARRED" to prohibit an access of the UE 10 by each cell.

### (Example of Cell Configuration)

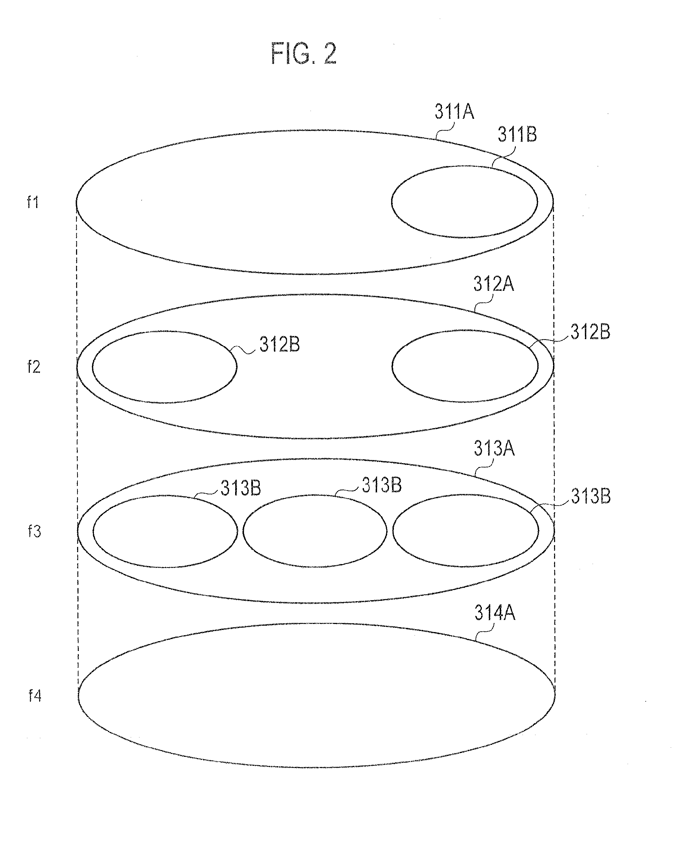

An example of a cell configuration according to the first embodiment is described below by referring to the drawings. Fig. 2 is a drawing showing an example of a cell configuration according to the first embodiment. Here, four frequencies (fl to f4) are described as an example. Also, a public cell 311A, a public cell 312A, a public cell 313A, and a public cell 314A have one and the same service area.

As shown in Fig. 2, provided in the frequency f1 is one specific cell 311B having a service area overlapping with the service area of the public cell 311A. In other words, the specific cell 311B is a cell having the service area overlapping with the service area of the public cell 311A and using the public cell 311A.

Provided in the frequency f2 is two specific cells 312B, each having a service area overlapping with the service area of the public cell 312A. In other words, the specific cell 312B is a cell having the service area overlapping with the service area of the public cell 312A and using the public cell 312A.

Provided in the frequency f3 is three specific cells 313B, each having a service area overlapping with the service area of the public cell 313A. In other words, the specific cell 313B is a cell having the service area overlapping with the service area of the public cell 313A and using the public cell 313A.

Provided in the frequency f4 is no specific cell having a service area overlapping with the service area of the public cell 314A.

It should be noted that in Fig. 2, public cells are generally referred to as a public cell 311A to a public cell 314A without having the public cell 111A and the public cell 211A distinguished from each other. Similarly, it should be noted that specific cells are generally referred to as a specific cell 311B to a specific cell 313B without having the specific cell 111B and the specific cell 211B distinguished from each other.

Also, in the example of the cell configuration shown in Fig. 2, a specific cell is not provided in the frequency f4. Thus, the public cell 314A hardly receives interference from the specific cell. In contrast, since the largest number of specific cells is provided in the frequency f3, there is a high possibility of receiving interference from the specific cell 313B in the public cell 313A.

### (Configuration of Network Apparatus)

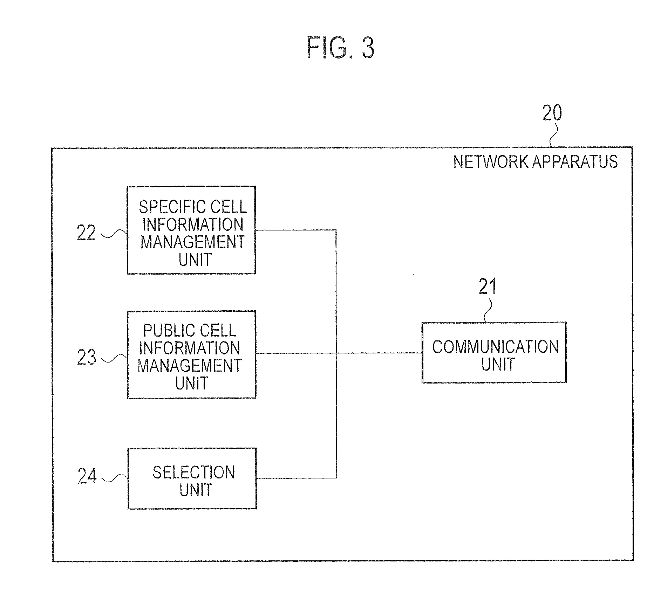

The configuration of the network device according to the first embodiment is described below by referring to the drawings. Fig. 3 is a drawing showing the network apparatus 20 according to the first embodiment. As shown in Fig. 3, the network apparatus 20 has a communication unit 21, a specific cell information management unit 22, a public cell information management unit 23, and a selection unit 24.

Note that the network apparatus 20 may be an apparatus (such as NB 110A, eNB 210A) which manages a public cell. Also, the network apparatus 20 may be an apparatus (such as RNC 120A, SGSN 130, MME 230) provided in an upper level of an apparatus managing a public cell.

In addition, in the following description, a case where a cell shown in Fig. 2 is provided under the network apparatus 20 is described as an example.

The communication unit 21 performs communications with the UE 10. Also, the communication unit 21 performs communications with other network apparatus.

For example, the communication unit 21 receives a communication request message from the UE 10 visiting any of the multiple public cells (the public cell 311A to the public cell 314A) provided under the network apparatus 20.

The specific cell information management unit 22 manages information on a specific cell for each of the multiple specific cells, the specific cell having a service area overlapping with the service area of the public cell and using the same frequency as the public cell.

Specifically, the specific cell information management unit 22 may manage the number of specific cells each having a service area overlapping with the service area of the public cell and using the same frequency as the public cell.

Instead, the specific cell information management unit 22 may manage the area of the service area of the specific cell having a service area overlapping with the service area of the public cell and using the same frequency as the public cell. The area of the service area of the specific cell may be only the area of a portion overlapping with the public cell.

For example, the specific cell information management unit 22 manages information on the specific cell 311B (e.g., the number of specific cells 311B or the area of the service area of the specific cell 311B) in association with the public cell 311A. Similarly, the specific cell information management unit 22 manages information on the specific cell 312B (e.g., the number of specific cells 312B or the area of the service area of the specific cell 312B) in association with the public cell 312A, and manages information on the specific cell 313B (e.g., the number of the specific cells 313B or the area of the service area of the specific cell 313B) in association with the public cell 313A. Note that the specific cell information management unit 22 manages that there is no specific cell in association with the public cell 314A.

The public cell information management unit 23 manages congestions of the multiple public cells (the public cell 311A to the public cell 314A) provided under the network apparatus 20. The congestion may be a traffic volume in each public cell or may be the number of codes used in each public cell, or may be the number of UEs 10 visiting each public cell.

The selection unit 24 selects a communication frequency to be used by the UE 10 among communication frequencies of the multiple public cells based on the information managed by the specific cell information management unit 22 in response to a communication request signal from the UE 10. In other words, the selection unit 24 selects a communication frequency to be used by the UE 10 based on the information on a specific cell having a service area overlapping with the service area of each public cell and using the same frequency as the public cell.

Note that possible methods of selecting the communication frequency to be used by the UE 10 include following cases.

Firstly, the selection unit 24 may select a communication frequency to be used by the UE 10 based only on the information managed by the specific cell information management unit 22. The selection unit 24 selects a public cell (a communication frequency) associated with the least number of specific cells. Alternatively, the selection unit 24 selects a public cell (a frequency) associated with the specific cell having the service area with the smallest area.

In other words, in the example of the cell configuration shown in Fig. 2, the selection unit 24 selects the frequency f4 in the public cell 314A as a communication frequency to be used by the UE 10.

Secondly, the selection unit 24 may select a communication frequency to be used by the UE 10 based on the congestions of the multiple public cells in addition to the information managed by the specific cell information management unit 22. The selection unit 24 gives a weight on the congestions of the public cells so that a priority level of a public cell would become higher as the number of specific cells associated with the public cell becomes smaller. Subsequently, the selection unit 24 selects a public cell (a communication frequency) whose weighted congestion is the smallest. Or, the selection unit 24 gives a weight on the congestions of the public cells so that a priority level of a public cell would be higher as the area of the service area of the specific cell associated with the public cell is smaller. Subsequently, the selection unit 24 selects a public cell (a communication frequency) whose weighted congestion is the smallest.

In other words, in the example of the cell configuration shown in Fig. 2, the selection unit 24 gives a weight on the congestion of the public cell 314A so that the priority level of the public cell 314A would be higher. In contrast, the selection unit 24 gives a weight on the congestion of the public cell 313A so that the priority level of the public cell 313A would be lower.

### (Operation of Network Apparatus)

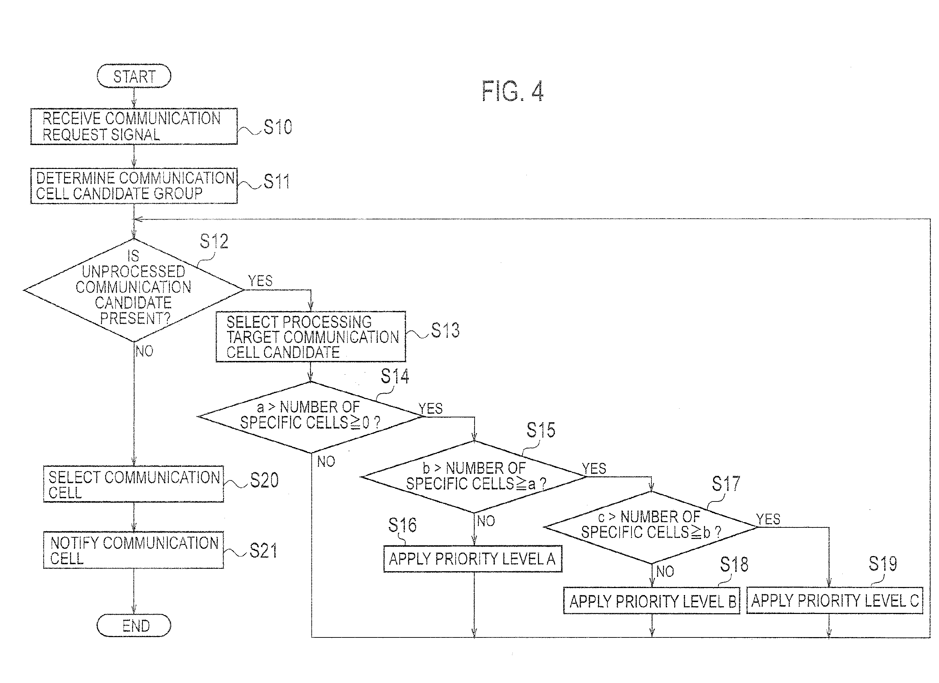

An operation of the network apparatus according to the first embodiment is described below by referring to the drawings. Fig. 4 is a flowchart showing an operation of the network apparatus 20 according to the first embodiment.

Note that in Fig. 4, described as an example is a case where the congestion of a public cell is weighted according to the number of specific cells associated with the public cell. However, as described above, the present invention is not limited to the embodiment.

As shown in Fig. 4, at Step 10, the network apparatus 20 receives a communication request signal from the UE 10 visiting any of the multiple public cells (the public cell 311A to the public cell 314A) provided under the network apparatus 20.

At Step 11, the network apparatus 20 determines a candidate group (hereinafter, a communication cell candidate group) of public cells (frequencies) used by the UE 10. The communication cell candidate group is a public cell group having a service area similar to that of the public cell relaying the communication request signal.

At Step 12, the network apparatus 20 determines if a communication cell candidate not performing the weighting processing shown in Step 14 to Step 19 is present in the communication cell candidate group. The network apparatus 20 proceeds to processing at Step S13 when such a communication cell candidate is present. On the other hand, the network apparatus 20 proceeds to processing at Step S20 when such a communication cell candidate is not present.

At Step 13, the network apparatus 20 selects a communication cell candidate on which the weighting processing shown in Step 14 to Step 19 should be performed.

At Step 14, the network apparatus 20 determines if the number of specific cells associated with the communication cell candidate selected at Step 13 is smaller than a threshold a. When the number of specific cells is smaller than the threshold a, the network apparatus 20 returns to the processing at Step 12. On the other hand, when the number of specific cells is equal to or larger than the threshold a, the network apparatus 20 proceeds to processing at Step 15.

At Step 15, the network apparatus 20 determines if the number of specific cells associated with the communication cell candidate selected at Step 13 is smaller than a threshold b (> the threshold a). When the number of specific cells is smaller than the threshold b, the network apparatus 20 proceeds to processing at Step 16. On the other hand, when the number of specific cells is equal to or larger than the threshold b, the network apparatus 20 proceeds to processing at Step 17.

At Step 16, the network apparatus 20 applies a priority level A to the communication cell candidate selected at Step S13. The priority level A is a value reducing a possibility of the communication cell candidate to be selected as a communication cell. Specifically, the network apparatus 20 gives a weight on the congestion of the communication cell candidate selected at Step 13 with the priority level A.

At Step 17, the network apparatus 20 determines if the number of specific cells associated with the communication cell candidate selected at Step 13 is smaller than a threshold c (> the threshold b). When the number of specific cells is smaller than the threshold c, the network apparatus 20 proceeds to processing at Step 18. On the other hand, when the number of specific cells is equal to or larger than the threshold c, the network apparatus 20 proceeds to processing at Step 19.

At Step 18, the network apparatus 20 applies a priority level B to the communication cell candidate selected at Step S13. The priority level B is a value reducing a possibility of the communication cell candidate to be selected as a communication cell as compared with the case of the priority level A. Specifically, the network apparatus 20 gives a weight on the congestion of the communication cell candidate selected at Step 13 with the priority level B.

At Step 19, the network apparatus 20 applies a priority level C to the communication cell candidate selected at Step S13. The priority level C is a value reducing a possibility of the communication cell candidate to be selected as a communication cell as compared with the case of the priority level B. Specifically, the network apparatus 20 gives a weight on the congestion of the communication cell candidate selected at Step 13 with the priority level C.

At Step 20, the network apparatus 20 selects a public cell (a communication frequency) used by the UE 10 based on the congestion weighted by the priority level. Specifically, the network apparatus 20 selects a public cell whose congestion weighted by the priority level is the smallest as a communication cell.

At Step 21, the network apparatus 20 notifies the UE 10 of a public cell (the communication frequency of the public cell) selected at Step 20 as a communication cell.

### (Advantageous Effects)

In the first embodiment, the selection unit 24 selects a communication frequency (a public cell) to be used by the UE 10 among communication frequencies of multiple public cells based on information managed by the specific cell information management unit 24, i.e., information on a specific cell having a service area overlapping with the service area of each public cell and using the same frequency as the public cell.

According, the communication frequency (the public cell) used by the UE 10 can be selected in consideration of interference from the specific cell.

### [Modification 1]

Modification 1 of the first embodiment is described below by referring to the drawings. The following description is provided mainly for portions different from those of the first embodiment.

Specifically, in Modification 1, described as an example is a method of collecting information on a specific cell having a service area overlapping with the service area of each public cell and using the same frequency as the public cell.

### (Case 1)

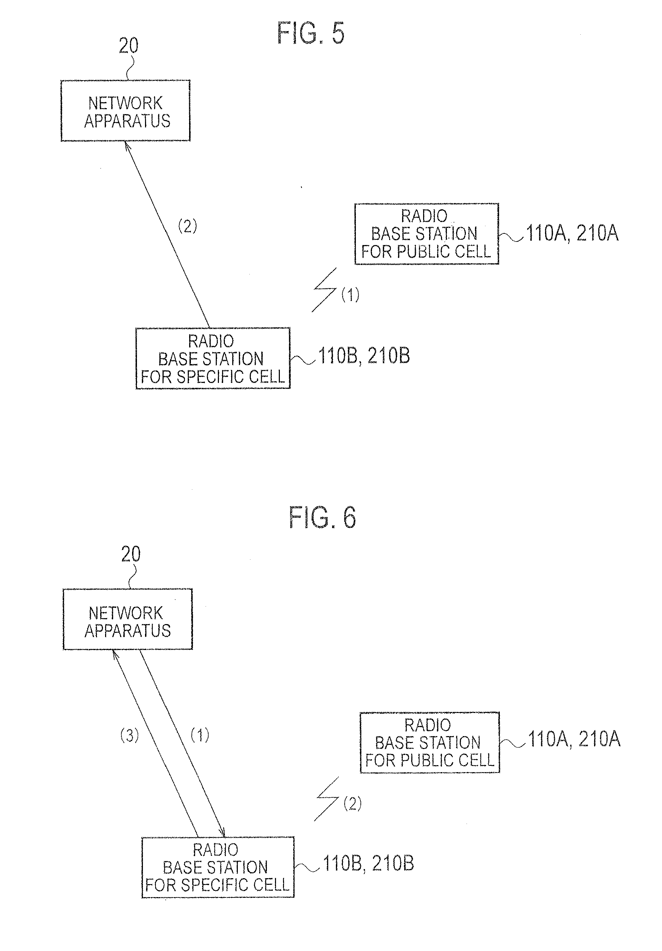

In the following description, Case 1 is described by referring to Fig. 5. In Case 1, a radio base station for a specific cell and a radio base station for a public cell are present under a network apparatus 20. Note that the radio base station for a public cell is an NB 110A or eNB 210A. The radio base station for a specific cell is an HNB 110B or HeNB 210B.

As shown in Fig. 5, (1) the radio base station for a specific cell receives notification which is periodically notified from the base station for a public cell. The notification contains at least public cell information such as an identifier identifying a public cell managed by the radio base station for a public cell and a frequency to be used by a public cell managed by the radio base station for a public cell. (2) The radio base station for a specific cell reports the public cell information contained in the notification to the network apparatus 20.

Accordingly, the network apparatus can identify the public cell having the service area overlapping with the service area of the radio base station for a specific cell with this public cell information. In other words, the network apparatus can acquire information on a specific cell having a service area overlapping with the service area of the public cell and using the same frequency as the public cell.

### (Case 2)

In the following description, Case 2 is described by referring to Fig. 6. Note that the description duplicated with that of Case 1 is omitted.

As shown in Fig. 6, (1) the network apparatus 20 gives an instruction to the radio base station for a specific cell to acquire notification. (2) The radio base station for a specific cell receives the notification which is periodically notified from the radio base station for a public cell. (3) The radio base station for a specific cell reports the public cell information contained in the notification to the network apparatus 20.

### (Case 3)

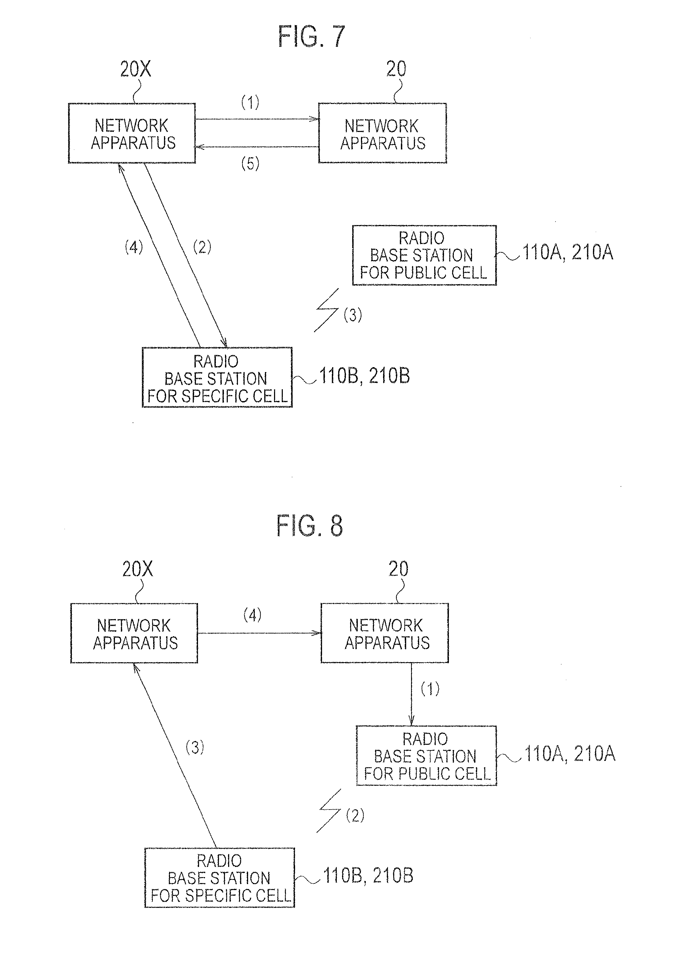

In the following description, Case 3 is described by referring to Fig. 7. Note that the description duplicated with that of Case 1 is omitted. In Case 1, the network apparatus 20 having the radio base station for a public cell under its control is different from a network apparatus 20X having the radio base station for a specific cell under its control.

As shown in Fig. 7, (1) the network apparatus 20 requests the information on a specific cell of the network apparatus 20X. (2) The network apparatus 20X instructs the radio base station for a specific cell to acquire notification. (3) The radio base station for a specific cell receives the notification which is periodically notified from the base station for a public cell. (4) The radio base station for a specific cell reports the public cell information contained in the notification to the network apparatus 20X. (5) The network apparatus 20X notifies the network apparatus 20 of the public cell information.

### (Case 4)

In the following description, Case 4 is described by referring to Fig. 8. Note that the description duplicated with that of Case 1 is omitted. In Case 4, the network apparatus 20 having the radio base station for a public cell under its control is different from a network apparatus 20X having a radio base station for a specific cell under its control.

As shown in Fig. 8, (1) the network apparatus 20 instructs the radio base station for a public cell to notify the notification. (2) The radio base station for a specific cell receives the notification notified from the base station for a public cell. (3) The radio base station for a specific cell reports the public cell information contained in the notification to the network apparatus 20X. (4) The network apparatus 20X notifies the network apparatus 20 of the public cell information.

### [Modification 2]

Modification 1 of the first embodiment is described below by referring to the drawings. In the following description, portions different from those of the first embodiment are mainly described.

Specifically, in Modification 2, described as an example is a method of calculating the area of a service area of a specific cell having the service area overlapping with the service area of a public cell and using the same frequency as the public cell.

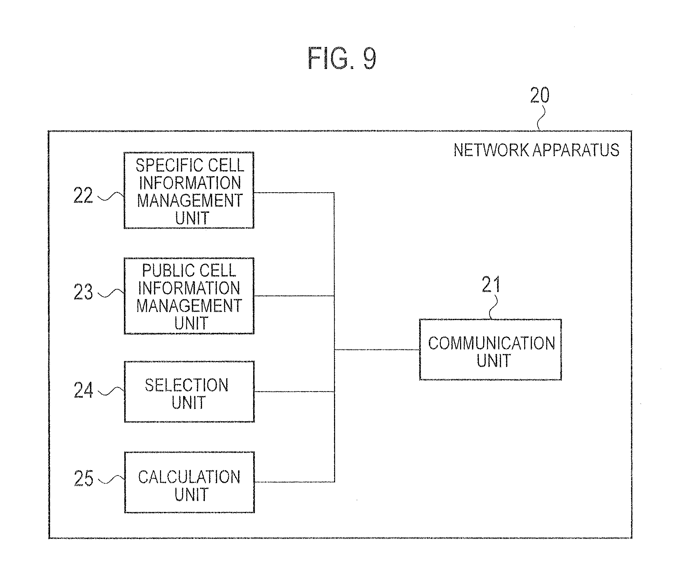

As shown in Fig. 9, a network apparatus 20 has a calculation unit 25 in addition to the configuration shown in Fig. 3.

The calculation unit 25 calculates the area of the service area of the specific cell based on the transmission power and antenna beam width of the specific cell. Note that the transmission power and antenna beam width of the specific cell may be notified to the network apparatus 20 from the radio base station for a specific cell.

### [Modification 3]

Modification 3 of the first embodiment is described below by referring to the drawings. In the following description, portions different from those of the first embodiment are mainly described.

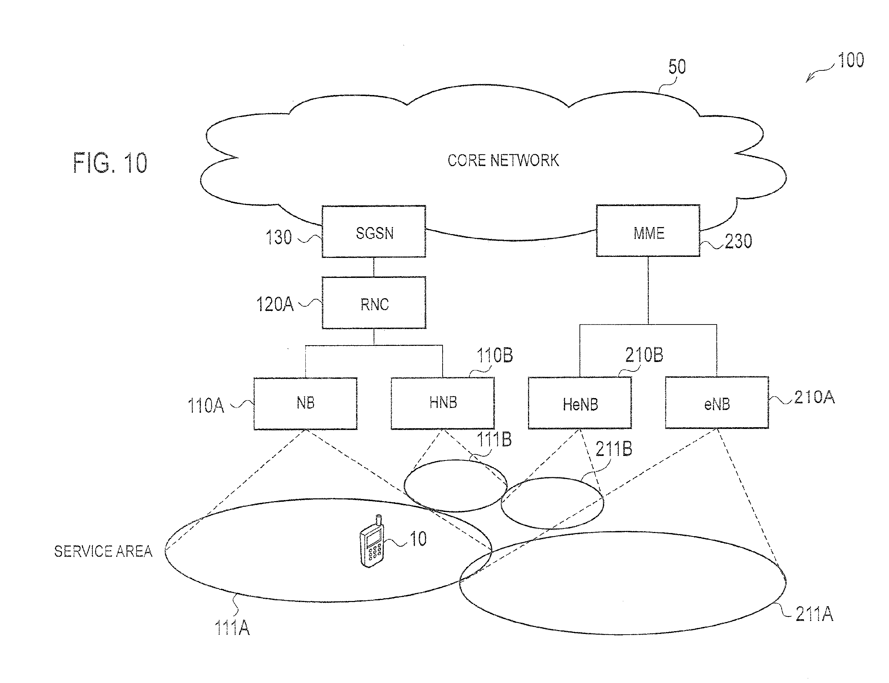

Specifically, in the first embodiment, an upper node of the HNB 110B is an HNB-GW 120B. On the other hand, in Modification 3, as shown in Fig. 10, an upper node of an HNB 110B is a RNC 120A.

In Modification 3, the RNC 120A manages an HNB 110B in place of an HNB-GW 120B. In other words, the RNC 120A provides functions similar to those of the HNB-GW 120B to devices residing under the RNC 120A.

In addition, in the first embodiment, an upper node of the HeNB 210B is the HeNB-GW 220B. On the other hand, in Modification 3, as shown in Fig. 10, an upper node of an HeNB 210B is an MME 230.

In Modification 3, the HeNB 210B provides functions similar to those of the HeNB-GW 220B to devices residing under the HeNB 210B in place of the HeNB-GW 220B.

Note that only the HBN-GW 120B may be omitted or only the HeNB-GW 220B may be omitted.

### [Other Embodiments]

The present invention has been described by using the above-described embodiment. However, it should not be understood that the description and the drawings, which constitute one part of this disclosure, are to limit the present invention. Various alternative embodiments, examples, and operational techniques will be obvious for those who are in the art from this disclosure.

The above-described embodiment illustrates the case where the configuration (the communication unit 21, the specific cell information management unit 22, the public cell information management unit 23, the selection unit 24 and the calculation unit 25) provided in the network apparatus 20 is provided in one apparatus. However, the embodiment is not limited to that configuration. In other words, the communication unit 21, the specific cell information management unit 22, the public cell information management unit 23, the selection unit 24, and the calculation unit 25 may be provided in other apparatuses, respectively.

For example, the specific cell information management unit 22 or the public cell information management unit 23 may be provided in a server provided in the core network 50.

Control signals such as RANAP (Radio Access Network Application Part), NBAP (Node B Application Part), RNSAP (Radio Network Subsystem Application Part), and HNBAP (Home Node B Application Part) are used in communications between respective apparatuses.

Note that an operation of the network apparatus 20 may be implemented by hardware or may be implemented by a software module to be executed by a processor, or may be implemented in combination of the both.

The software module may be provided in any form of a recording medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

Such recording medium is connected with a processor so that the processor can read and write information on the recording medium. Also, such recording medium may be integrated on the processor. Instead, such recording medium and the processor may be provided inside ASIC. Such ASIC may be provided inside the network apparatus 20. Alternatively such recording medium and the processor may be provided as discrete components inside the network apparatus 20.

Note that the contents of Japanese Patent Application No. 2010-009533 (filed on January 19, 2010) are hereby incorporated by reference in their entirety.

### INDUSTRIAL APPLICABILITY

The present invention can provide a mobile communication system, a network apparatus, and a mobile communication method, which are capable of properly selecting a public cell as a communication cell among multiple public cells even in a state where the multiple public cells and a specific cell coexist. Thus, the present invention is useful in a radio communication and the like.

### EXPLANATION OF THE REFERENCE NUMERALS

10... communication terminal device, 20... network apparatus, 21... communication unit, 22... specific cell information management unit, 23... public cell information management unit, 24... selection unit, 25... calculation unit, 50... core network, 100... mobile communication system, 110A... NB, 110B... HNB, 111A... public cell, 111B... specific cell, 120A... RNC, 120B... HNB-GW, 130... SGSN, 210A... eNB, 210B... HeNB, 211A... public cell, 211B... specific cell, 220B... HeNB-GW, 230... MME, 311A~314A... public cell, 311B~314B... specific cell.

## Claims

1. A mobile communication system having a plurality of public cells whose communication frequencies are different from one another and at least one specific cell, the mobile communication system comprising:
a specific cell information management unit configured to manage information on a specific cell for each of the plurality of public cells, the specific cell having a service area overlapping with the service area of the public cell and using the same frequency same as the public cell;
a reception unit configured to receive a communication request signal from a mobile communication terminal visiting any of the plurality of public cells; and
a selection unit configured to select a communication frequency to be used by the mobile communication terminal among the communication frequencies of the plurality of public cells based on the information managed by the specific cell information management unit in response to the communication request signal from the mobile communication terminal.

2. The mobile communication system according to claim 1, wherein the specific cell information management unit manages the number of specific cells for each of the plurality of public cells, the specific cells each having a service area overlapping with the service area of the public cell and using the same frequency as the public cell.

3. The mobile communication system according to claim 1, wherein the specific cell information management unit manages the area of a service cell of a specific cell for each of the plurality of public cells, the specific cell having a service area overlapping with the service area of the public cell and using the same frequency as the public cell.

4. The mobile communication system according to claim 3, further comprising a calculation unit configured to calculate the area of a service area of a specific cell based on transmission power and an antenna beam width of the specific cell.

5. The mobile communication system according to claim 1, wherein the selection unit selects a communication frequency to be used by the mobile communication terminal among the communication frequencies of the plurality of public cells based on congestions of the plurality of public cells in addition to the information managed by the specific cell information management unit.

6. A network apparatus configured to manage a plurality of public cells whose communication frequencies are different from one another and at least one specific cell, the network apparatus comprising:
a specific cell information management unit configured to manage information on a specific cell for each of the plurality of public cells, the specific cell having a service area overlapping with the service area of the public cell and using the same frequency as the public cell;
a reception unit configured to receive a communication request signal from a mobile communication terminal visiting any of the plurality of public cells; and
a selection unit configured to select a communication frequency to be used by the mobile communication terminal among the communication frequencies of the plurality of public cells based on the information managed by the specific cell information management unit in response to the communication request signal from the mobile communication terminal.

7. A mobile communication method applied to a mobile communication system having a plurality of public cells whose communication frequencies are different from one another and at least one specific cell, the mobile communication method comprising:
step A of managing information on a specific cell for each of the plurality of public cells, the specific cell having a service area overlapping with the service area of the public cell and using the same frequency as the public cell;
step B of receiving a communication request signal from a mobile communication terminal visiting any of the plurality of public cells; and
step C of selecting a communication frequency to be used by the mobile communication terminal among the communication frequencies of the plurality of public cells based on the information managed at step A in response to the communication request signal from the mobile communication terminal.
